Europäisches Patentamt

European Patent Office

Office européen des brevets

(11) Veröffentlichungsnummer: **0 118 744**
**A2**

(12) # EUROPÄISCHE PATENTANMELDUNG

(21) Anmeldenummer: **84101175.2**

(22) Anmeldetag: **06.02.84**

(51) Int. Cl.³: **C 04 B 21/00**
**C 04 B 17/01**

(30) Priorität: **07.02.83 DE 3304033**

(43) Veröffentlichungstag der Anmeldung:
**19.09.84 Patentblatt 84/38**

(84) Benannte Vertragsstaaten:
**AT BE CH DE FR GB IT LI LU NL SE**

(71) Anmelder: **OTAVI MINEN AG**
**Hynspergstrasse 24**
**D-6000 Frankfurt/Main(DE)**

(72) Erfinder: **Car, Martin, Dipl.-Ing.**
**Kastanienstrasse 5**
**D-6464 Linsengericht-Grossenhausen(DE)**

(74) Vertreter: **Solf, Alexander, Dr. et al,**
**Patentanwälte Dr. Hasse, Dr. Solf & Zapf Asamstrasse 8**
**D-8000 München 90(DE)**

(54) **Leichtbaustoff sowie Verfahren zu seiner Herstellung.**

(57) Die Erfindung betrifft einen Leichtbaustoff, der geblähten Perlit als Zuschlagstoff und ein Bindemittelgerüst aufweist. Der neue Leichtbaustoff weist ein Bindemittelgerüst
aus Sorel-Zement oder Aluminium-phosphat auf, wobei im
Bindemittelgerüst Schaum- und/oder Blähporenstrukturen
enthalten sind. Die Erfindung betrifft ferner ein Verfahren
Herstellung des neuen Leichtbaustoffs.

Croydon Printing Company Ltd.

# PATENTANWÄLTE

Zugelassene Vertreter beim Europäischen Patentamt
European Patent Attorneys

# DR. SOLF & ZAPF

München - Wuppertal

0118744

OTAVI MINEN AG

Hynspergstraße 24

6000 Frankfurt/Main 18

2. Februar 1984.

M 71    EPA

## Leichtbaustoff sowie Verfahren zu seiner Herstellung

In der deutschen Patentanmeldung P 31 31 548.8 wird ein Leichtbaustoff beschrieben, der geblähten Perlit als Zuschlagstoff und ein Bindemittelgerüst aus einem Alkalisilikat oder einem Guanidinsilikat aufweist, wobei in der Struktur des Leichtbaustoffs Schaum- und/oder Blähporen im Bindemittelgerüst enthalten sind. Der Porengehalt, der aus dem Porengefüge des Bindemittelgerüsts resultiert, beträgt 95 bis 99 Vol.-%. Derartige Leichtbaustoffe können Raumgewichte von 70 bis 180 $kg/m^3$ und Festigkeiten von 0,09 bis 0,27 $N/mm^2$ aufweisen. Das Verfahren zur Herstellung dieser Produkte zeichnet sich dadurch aus, daß Mörtelmischungen aus Perlit, Wasserglas, Wasser, Härter und Luftporenbildner zusammengemischt werden, wobei die Luftporenbildner Luftporen erzeugen. Anschließend läßt man die Mörtelmischung geformt oder ungeformt erhärten. In den Mörtelmischungen kann Perlit teilweise durch Vermiculit und/oder Blähton und/oder Schaumglas oder dgl. ersetzt werden. Zudem können die Mörtelmischungen Bentonit und/oder Kaolin und/oder Reisschalenasche enthalten. Zur Aktivierung des Porenbildners werden die Mörtelmischungen

Asamstraße 8, D-8000 München 90
Telefon (089) 653665; Telefax (089) 653218
Telex: 5214168 soza d

Patentanwalt Dr. Ing. Dipl.-Ing. W. Hasse
Patentanwalt Dr.-Ing. Dipl.-Ing. A. Solf
Patentanwalt Dipl.-Ing. Chr. Zapf

leicht gerührt. Vorteilhaft ist,wenn die Komponenten Wasserglas und Tensid getrennt zur Mischung gegeben werden, wobei Vormischungen mit einem Reaktionspartner hergestellt und der andere Reaktionspartner zugesetzt wird, wenn das Schäumen und/oder Blähen beginnen soll. Insbesondere werden zwei oder mehr Vormischungen hergestellt, wobei die eine Vormischung den einen und die andere Vormischung den anderen Reaktionspartner enthält.

Dieser vorgeschlagenen Erfindung liegt die Aufgabe zugrunde, bei ausreichender Festigkeit einen sehr leichten Leichtbaustoff zu schaffen, was dadurch gelingt, daß bei der Herstellung der zu härtenden Mörtelmischung stabile Luftporen erzeugt werden, deren Struktur nach der Erhärtung im wesentlichen erhalten bleibt. Der vorgeschlagene, relativ hohe Festigkeiten aufweisende, rein mineralische Baustoff, dessen geringes Raumgewicht sowohl aus der Porosität des Perlits als auch aus der durch den Luftporenbildner erzeugten Porenstruktur resultiert, ist nicht entflammbar und eignet sich insbesondere für die Wärme- und Schallisolation.

Aufgabe der Erfindung ist, einen weiteren derartigen Leichtbaustoff mit etwa dem gleichen Raumgewicht zur Verfügung zu stellen, der höhere Anfangs- und Endfestigkeiten liefert oder der temperaturbeständiger insbesondere hochtemperaturbeständig sein soll.

Diese Aufgabe wird durch die Merkmale des Hauptanspruchs gelöst. Zweckmäßige Weiterbildungen der Erfindung sind Gegenstand der Unteransprüche.

Bekannt ist, Formkörper aus geblähten Mineralien unter Verwendung von Calciumaluminat und Aluminiumphosphat herzustellen (DE-OS 31 15 758). Ferner ist bekannt, Perlit und Vermiculit mit Monoaluminiumphosphat zu binden (DE-OS 28 47 807). Zur Gewährleistung einer ausreichenden Festigkeit sind nach diesem Stand der Technik besondere Maßnahmen vorzusehen. Es müssen entweder den geblähten Mineralien Hydrophobierungsmittel oder der Mischung Mineralfasern zugesetzt werden.

Darüberhinaus ist die Verwendung von Sorelzement als Bindemittel bekannt. Beispielsweise wird in der DE-OS 30 31 086 ein Verfahren zur Herstellung von Magnesia-mörtel- oder -estrichmassen beschrieben. Die bekannten Massen sollen verschiedene Füllstofftypen enthalten, um eine gute Verarbeitbarkeit zu gewährleisten. In Kombination sollen saugfähige, härtende und faserförmige Füllstoffe zugesetzt werden. Die Verwendung eines Luftporenbildners wird nicht angesprochen.

Die Erfindung geht einen anderen Weg und bringt Luftporen in die Mischung ein. Normalerweise vermindern Luftporen die Festigkeit eines z.B. Festmörtels. Insofern ist der erfindungsgemäße Weg nicht vorgezeichnet. Vielmehr ist überraschend, daß trotz des Einbringens der Luftporen ausreichende Festigkeiten erzielt werden können. Zudem ist nicht naheliegend, in eine Mischung, die Perlit und einen Phosphatbinder enthält, einen Luftporenbildner einzubringen. Tatsächlich gelingt es auch nicht ohne weiteres, in einer derartigen Mischung Luftporen zu entwickeln. Die gängigen Luftporenbildner, die z.B. für Frischmörtel auf Zement- und/oder Kalkbasis verwendet werden, deren wässriges Milieu stark basisch ist, entwickeln keine ausreichenden Mengen an Luftporen bzw. keinen stabilen Schaum in einem sauren Medium. Die erfindungsgemäß verwendeten Bindemittel erzeugen aber ein saures Milieu; dennoch gelingt die Luftporenbildung insbesondere mit einem Ammoniumsalz des Alkylpolyglycoläthersulfats. Dieses Produkt, das unter der Bezeichnung Zeliquid LP-2 bzw. Hoe S 1703 von der Firma Hoechst AG an die Baustoffindustrie geliefert wird, gilt als stark schäumendes Baustoffzusatzmittel, das insbesondere zur Herstellung poröser Gipsmassen verwendet werden soll. Gipsmassen weisen ein neutrales bis schwach basisches Milieu auf, so daß die Verwendung dieses bekannten Baustoffzusatzmittels für die Zwecke der Erfindung von Haus aus nicht geeignet erscheint. Offenbar bewirkt die hohe spezifische Oberfläche des Perlits mit dem Zusatzstoff Reaktionen, die die Luftporenbildung trotz des sauren Milieus unterstützen. Denkbar ist aber auch, daß Perlit eine Art Pufferwirkung erzeugt, so daß der pH-Wert des Milieus nicht auf die Bildung derLuftporen durchschlägt. Eine begründete Erklärung für die sehr gute Luftporenbildung in den erfindungsgemäßen Massen konnte bisher noch nicht gefunden werden.

Die Erfindung sieht zum einen vor, Sorelzement als Bindemittel zu verwenden. Demgemäß werden erfindungsgemäße Leichtbaustoffe aus Mischungen folgender Zusammensetzungen hergestellt:

30 bis 70 Gew.% Perlit
20 bis 35 Gew.% MgO
20 bis 35 Gew.% $MgCl_2$ x 5 $H_2O$
0,01 bis 1,0 Gew.% Luftporenbildner

Die Körnung des Perlits liegt vorzugsweise im Bereich von 0 bis 6 mm. Als Luftporenbildner wird vornehmlich ein Ammoniumsalz des Alkylpolyglycoläthersulfats verwendet. Dieses Produkt wird von der Firma Hoechst AG unter der Bezeichnung HoeS 1703 oder Zelequid LP-2 angeboten. Es handelt sich um eine gelbe klare Flüssigkeit, die anionenaktiv und mit anionenaktiven und nichtionogenen Tensiden verträglich ist. Ihr Aktivgehalt beträgt 56 $\pm$ 1,5 %. Das Zusatzmittel ist sehr gut beständig gegen die Härtebildner des Wassers und in Wasser sehr gut löslich. Die Lagerfähigkeit ist bis etwa $-20^{\circ}C$ gegeben. Die Viskosität der Flüssigkeit bei $20^{\circ}C$ (nach Hoeppler) beträgt etwa 30mPas. Die Dichte der Flüssigkeit liegt bei etwa 1,03 $g/cm^3$.

Die folgenden Beispiele geben Rezepturen an, die den Einfluß der Bindemittelmenge und anderer Parameter verdeutlichen.

Beispiel 1

Es wurde eine Mischung aus folgenden Bestandteilen hergestellt:

2 l*Perlit (Körnung 0 bis 1 mm) Schüttgewicht 40g/l)
30g MgO
30g $MgCl_2$ x 5 $H_2O$
0,5g Zeliquid LP 2
180g Wasser

Dabei wurde zunächst eine Vormischung aus Perlit und MgO erstellt und diese der Mischung bestehend aus $MgCl_2$ x 5 $H_2O$ dem Luftporenbildner und Wasser zugemischt. Das Wasser diente zur Verteilung des Bindemittels und zur Homogenisierung der Mischung. Die Gesamtmischung wurde in eine Form gefüllt und bei etwa 12 $N/mm^2$ gepreßt. Nach einer 24-stündigen Erhärtung ergaben sich ein Raumgewicht von 140g/l und eine Kaltdruckfestigkeit von 0,06 $N/mm^2$.

Die Herstellung der Vormischung ist zweckmäßig, weil dadurch die Homogenisierung der Mischung besser gewährleistet werden kann. Im Zusammenhang damit wird das Raumgewicht und die Kaltdruckfestigkeit günstig beeinflußt.

*(2 l = zwei Liter)

Beispiel 2

Entsprechend Beispiel 1 wurde eine Mischung folgender Zusammensetzung angesetzt.

2 1 Perlit (Körnung 0 bis 1 mm; Schüttgewicht 40g/1)
60 g MgO
60 g $MgCl_2$ x 5 $H_2O$
0,2 g Luftporenbildner
200 g Wasser

Es wurden wiederum zwei Vormischungen hergestellt, die anschließend zusammengemischt wurden. Die Mischung wurde in eine Form gegossen. Dabei ergaben sich ein Raumgewicht von 140 g/1 und eine Druckfestigkeit von 0,1 $N/mm^2$. Die gleiche Mischung wurde in eine Form gegeben und anschließend mit 12 $N/mm^2$ gepreßt. Dabei ergab sich ein Raumgewicht von 218 g/1 und eine Kaltdruckfestigkeit von über0,35 $N/mm^2$.

Dieses Beispiel verdeutlicht, daß das Pressen einen erheblichen Einfluß auf das Raumgewicht und die Kaltdruckfestigkeit hat. Mit dem Mittel des Pressens können insofern diese Parameter in weiten Grenzen variiert werden.

Beispiel 3

Entsprechend Beispiel 1 wurde eine Gesamtmischung aus Vormischungen hergestellt, wobei die Gesamtmischung die folgende Zusammensetzung aufwies:

2 1 Perlit (Körnung 0 bis 1 mm; Schüttgewicht 40g/1)
60 g MgO
60 g $MgCl_2$ x 5 $H_2O$
1 g Luftporenbildner
170 g Wasser

Die Mischung wurde in eine Form gegeben. Anschließend erfolgte eine Pressung mit 12 N/mm$^2$. Nach 24-stündiger Aushärtung ergab sich ein Raumgewicht von 167 g/l und eine Kaltdruckfestigkeit von 0,24 N/mm$^2$. Nach 28 Tagen betrug die Kaltdruckfestigkeit 0,297 N/mm$^2$. Eine Dampfhärtung, die nach der 24-stündigen Härtung durchgeführt worden ist, indem der Formkörper mit Wasserdampf beaufschlagt wurde, führte zu einer Erhöhung der Druckfestigkeit auf 0,288 N/mm$^2$, wobei die Dampfhärtung lediglich eine halbe Stunde durchgeführt worden war.

Eine weitere besondere Ausführungsform der Erfindung sieht eine Phosphatbindung der Leichtbaustoffe vor. Verwendet wird ein Gemisch aus einer Phosphorsäure und Aluminiumhydroxid oder ein handelsübliches Aluminiumphosphat. Bevorzugt werden die folgenden Mischungen:

35 bis 70 Gew.% Perlit
10 bis 75 Gew.% Tonerde und/oder Tonerdehydrat, vorzugsweise Aluminiumhydroxid (Al (OH)$_3$)
10 bis 35 Gew.% Phosphorsäure
0.05 bis  1 Gew.% Luftporenbildner

wobei vorzugsweise der Tonerde und /oder Tonerdehydratgehalt gegenüber dem Phosphorsäuregehalt überwiegt. Durch den höheren Tonerdegehalt und/oder Tonerdehydratgehalt kann die Verfestigungs- bzw. Reaktionstemperatur relativ niedrig gehalten werden. Dabei ist es vorteilhaft, wenn eine Vormischung aus der tonerdehaltigen und/oder tonerdehydrathaltigen Komponente und der Phosphorsäure erstellt wird, und die anderen Mischungspartner gemeinsam oder einzeln danach zugegeben werden.

Oder

35 bis 70 Gew.% Perlit
20 bis 70 Gew.% Aluminiumphosphat
0,05 bis  1 Gew.% Luftporenbildner

Diesen Mischungen wird zur Erleichterung der Homogenisierung Wasser zugesetzt. Die Wassermengen richten sich nach den jeweiligen Erfordernissen der Mischaggregate.

Als Luftporenbildner wird vorzugsweise Zeliquid LP-2 verwendet. Zweckmäßig ist, eine Vormischung aus Perlit und Aluminiumhydroxid oder Perlit und Aluminiumphosphat und eine weitere Vormischung aus den anderen Bestandteilen der Mischung herzustellen und die Vormischungen zusammenzumischen. Anschließend erfolgt die Aushärtung durch Wärmeeinwirkung. Vorzugsweise wird bei Temperaturen von 100 bis 600°C, insbesondere bei 200 bis 400°C, ausgehärtet.

Zweckmäßig ist auch in diesem Fall, die Raumgewichte und die Festigkeiten des ausgehärteten erfindungsgemäßen Leichtbaustoffs durch eine leichte Pressung zu beeinflussen. Dabei kann in überraschender Weise durch die Pressung eine Erhöhung der Kaltdruckfestigkeit erzielt werden, obwohl das Raumgewicht durch die Pressung nicht verändert wird. Durch die Pressung wird die Struktur der Luftporen nicht zerstört.

Mit den oben angegebenen Mischungsverhältnissen lassen sich insbesondere Leichtbaustoffe mit Raumgewichten von 70 bis 350, insbesondere 100 bis 250 g/l und mit Kaltdruckfestigkeiten von 0,15 bis 0,60 N/mm$^2$ herstellen.

Als Perlit wird zweckmäßigerweise Blähperlit im Kornbereich von 0 bis 6 mm und im Schüttgewichtsbereich von 20 bis 150 g/l, vorzugsweise von 20 bis 60 g/l verwendet.

Die folgenden Beispiele verdeutlichen die Erfindung bezüglich des phosphatgebundenen erfindungsgemäßen Leichtbaustoffs.

Beispiel 4

Es wurde eine Vormischung aus

   2 1 Perlit (Körnung 0 bis 1 mm; Schüttgewicht 40 g/l)
   35 g Al(OH)$_3$

sowie eine weitere Vormischung aus

   50 g H$_3$PO$_4$ (85%ige Phosphorsäure)
   0,5 g Zeliquid LP-2
   150 g Wasser

hergestellt.

Anschließend wurden die Vormischungen zusammengemischt und die Gesamtmischung in Formen gefüllt. Es erfolgte eine Pressung mit 12 N/mm$^2$. Danach wurde bei 400°C eine halbe Stunde lang ausgehärtet. Nach dem Erkalten der Formkörper ergaben sich Produkte mit einem Raumgewicht von 150 g/l und einer Kaltdruckfestigkeit von 0,29 N/mm$^2$.


Beispiel 5

Es wurde eine Mischung aus folgenden Bestandteilen hergestellt:

   2 1 Perlit (Körnung 0 bis 1 mm; Schüttgewicht 40 g/l)
   55 g Aluminiumphosphatbinder (Fabulit der Firma Chemische
                                Werke Budenheim)
   0,5 g Zeliquid LP-2
   170 g Wasser

Die Mischung wurde in Formen gefüllt und mit 12 N/mm$^2$ gepreßt. Danach erfolgte eine Aushärtung bei 400°C. Die erkalteten Produkte wiesen ein Raumgewicht von 130 g/l und eine Festigkeit von 0,16 N/mm$^2$ auf.


Beispiel 6

Aus zwei Vormischungen entsprechend Beispiel 4 wurde eine Mischung folgender Zusammensetzung hergestellt:

2 1 Perlit (Körnung 0 bis 1 mm; Schüttgewicht 40 g/l)

35 g Al(OH)$_3$

50 g H$_3$PO$_4$

0,5 g Zeliquid LP-2

200 g Wasser

Die Mischung war gießfähig und wurde in Formen gegossen. Anschließend erfolgte eine Aushärtung bei 400°C. Das erkaltete Produkt wies ein Raumgewicht von 140 g/l und eine Kaltdruckfestigkeit von 0,03 N/mm$^2$ auf.

Beispiel 7

Entsprechend Beispiel 4 wurde aus zwei Vormischungen eine Gesamtmischung folgender Zusammensetzung hergestellt:

2 1 Perlit (Körnung 0 bis 1 mm; Schüttgewicht 40 g/l)

70 g Al(OH)$_3$

100 g H$_3$PO$_4$

0,5 g Zeliquid LP-2

120 g Wasser

Das Gemisch wurde in Formen gegeben und mit 12 N/mm$^2$ gepreßt. Anschließend erfolgte eine Aushärtung bei 400°C. Das erkaltete Produkt hatte ein Raumgewicht von 212g/l und eine Kaltdruckfestigkeit von 0,36 N/mm$^2$.

Beispiel 8

Entsprechend Beispiel 4 wurde aus zwei Vormischungen eine Gesamtmischung mit folgender Zusammensetzung hergestellt:

2 l Perlit (Körnung 0 bis 1 mm; Schüttgewicht 40 g/l)

35 g Al(OH)$_3$

50 g H$_3$PO$_4$

2 g Zeliquid LP-2

200 g Wasser

Die Mischung wurde in Formen gegossen und bei/400$^O$C ausgehärtet. Es ergaben sich Produkte mit einem Raumgewicht von 77 g/l und einer Druckfestigkeit von 0,01 N/mm$^2$.

Aus obigen Beispielen ergibt sich, daß die Kaltdruckfestigkeit durch den Bindemittelanteil und die Pressung aber auch durch den Anteil des Luftporenbildners beeinflußt werden kann.

Die erfindungsgemäßen phosphatgebundenen Leichtbaustoffe sind temperaturbeständig zumindest bis etwa 800$^O$C. Insbesondere weisen die erfindungsgemäßen Produkte eine Anwendungsgrenze erst/bei etwa 1360$^O$C auf. Sie sind demgemäß besonders geeignet in Kombination mit feuerfesten Produkten.

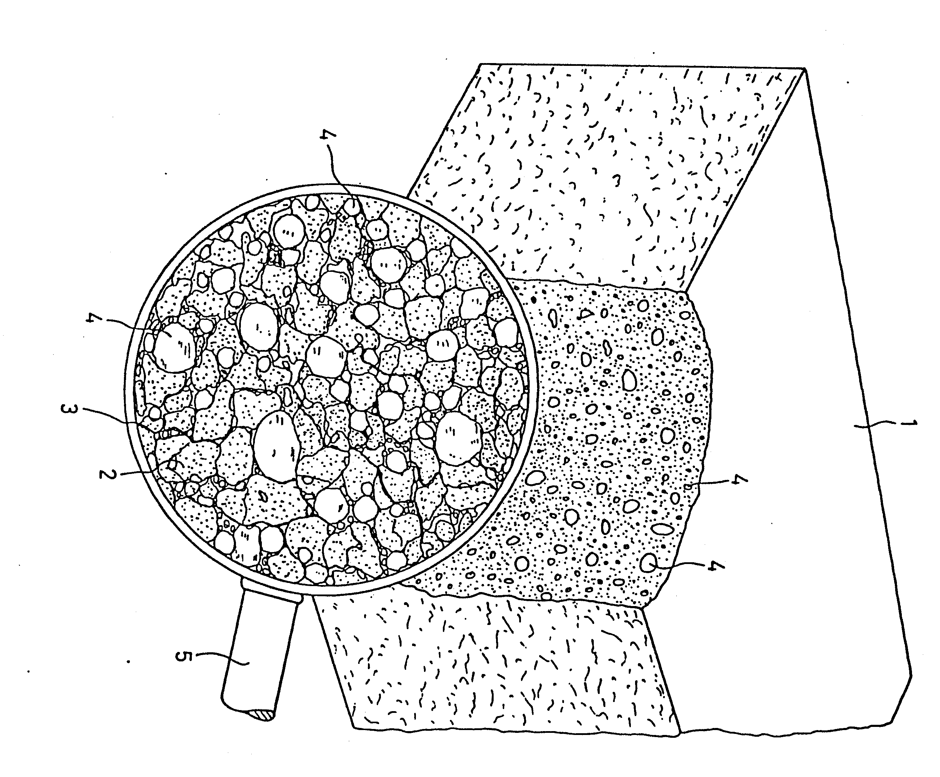

Anhand der Zeichnung wird die Struktur des erfindungsgemäßen Leichtbaustoffes näher erläutert.

Der als Leichtbauplatte 1 angedeutete erfindungsgemäße Leichtbaustoff weist in seiner Struktur Perlitkörner 2 in dichter Schüttung auf, wobei die Perlitkörner durch das Bindemittelgerüst 3 miteinander verbunden sind. Daraus resultiert im wesentlichen die Festigkeit des Leichtbaustoffes. In der Struktur sind ferner Poren 4 vorhanden, die aus dem Blähprozeß oder Schäumprozeß resultieren und deren Porenwandungen von der Bindemittelgerüstsubstanz gebildet werden. Diese Ausgestaltung der Struktur wird in der Zeichnung durch das schedatische Bild der Lupe 5 verdeutlicht.

Patentansprüche

1. Leichtbaustoff, der geblähten Perlit als Zuschlagstoff und ein Bindemittelgerüst und im Bindemittelgerüst Schaum- und/oder Blähporenstrukturen aufweist, dadurch gekennzeichnet, daß das Bindemittelgerüst aus Sorel-Zement besteht.

2. Leichtbaustoff, der geblähten Perlit als Zuschlagstoff und ein Bindemittelgerüst mit einer Schaum- und/oder Blähporenstruktur aufweist, dadurch gekennzeichnet, daß das Bindemittelgerüst aus einem Aluminiumphosphat besteht.

3. Leichtbaustoff nach Anspruch 1 oder 2, dadurch gekennzeichnet, daß der Porengehalt, der aus dem Porengefüge des Bindemittelgerüsts und Zuschlagstoff resultiert, 85 bis 99 Vol.-% beträgt.

4. Leichtbaustoff nach einem oder mehreren der Ansprüche 1 bis 3, gekennzeichnet durch Raumgewichte von 70 bis 350 g/l, insbesondere 100 bis 250 g/l.

5. Leichtbaustoff nach einem oder mehreren der Ansprüche 1 bis 4, gekennzeichnet durch Festigkeiten von 0,15 bis 0,60 $N/mm^2$.

6. Verfahren zur Herstellung eines Leichtbaustoffs nach einem der Ansprüche 1 sowie 3 bis 5, dadurch gekennzeichnet, daß Mörtelmischungen folgender Zusammensetzung verwendet werden:

30 bis 70 Gew.% Perlit
20 bis 35 Gew.% MgO
20 bis 35 Gew.% $MgCl_2$ x $5H_2O$
0,01 bis 1 Gew.% Luftporenbildner

7. Verfahren nach Anspruch 6, dadurch gekennzeichnet,
daß als Luftporenbildner ein Ammoniumsalz des Alkylpolyglycoläthersulfats verwendet wird.

8. Verfahren nach Anspruch 6 und/oder 7, dadurch gekennzeichnet, daß Perlit mit Korngrößen im Kornbereich
von 0 bis 6 mm und einem Schüttgewicht von 20 bis
150 g/l, vorzugsweise von 20 bis 60 g/l, verwendet wird.

9. Verfahren nach einem oder mehreren der Ansprüche 6
bis 8, dadurch gekennzeichnet, daß den Mischungen
Wasser zugesetzt wird.

10. Verfahren nach einem oder mehreren der Ansprüche 6
bis 9, dadurch gekennzeichnet, daß die Mischungen in
eine Form bzw. einen Formkörper eingebracht und
vorzugsweise gepreßt werden.

11. Verfahren nach einem oder mehreren der Ansprüche
6 bis 10, dadurch gekennzeichnet, daß die Mischungen
mit Wasserdampf beaufschlagt werden.

12. Verfahren zur Herstellung eines Leichtbaustoffs
nach einem der Ansprüche 2 bis 5, dadurch gekennzeichnet, daß für das Bindemittelgerüst ein Aluminiumphosphat verwendet wird.

13. Verfahren zur Herstellung eines Leichtbaustoffs
nach einem der Ansprüche 2 bis 5, dadurch gekennzeichnet, daß ein Gemisch folgender Zusammensetzung
verwendet wird:

    35 bis 70 Gew.-% Perlit

    10 bis 35 Gew.-% Tonerde und/oder Tonerdehydrat,
                  vorzugsweise Aluminiumhydroxid
                  $(Al(OH)_3)$

    10 bis 35 Gew.-% Phosphorsäure

  0,05 bis  1 Gew.-% Luftporenbildner,

wobei vorzugsweise der Tonerde und/oder Tonerdehydratgehalt gegenüber dem Phosphorsäuregehalt überwiegt
und vorzugsweise eine Vormischung aus der tonerdehaltigen und/oder tonerdehydrathaltigen Komponente
und der Phosphorsäure erstellt wird und die anderen
Mischungspartner gemeinsam oder einzeln danach zugegeben werden.

14. Verfahren nach Anspruch 12, dadurch gekennzeichnet,
daß eine Mischung folgender Zusammensetzung verwendet
wird:
      35 bis 70 Gew.% Perlit
      20 bis 70 Gew.% Aluminiumphosphat
      0,05 bis  1 Gew.% Luftporenbildner

15. Verfahren nach einem oder mehreren der Ansprüche 12
bis 14, dadurch gekennzeichnet, daß den Mischungen
Wasser zugesetzt wird.

16. Verfahren nach einem oder mehreren der Ansprüche 12
bis 15, dadurch gekennzeichnet, daß als Luftporenbildner ein Ammoniumsalz des Alkylpolyglycoläthersulfats verwendet wird.

17. Verfahren nach einem oder mehreren der Ansprüche 12
bis 16, dadurch gekennzeichnet, daß eine Vormischung
aus Perlit und Aluminiumhydroxid sowie eine weitere
Vormischung aus den anderen Bestandteilen der Mischung
hergestellt und die Vormischungen zusammengemischt
werden.

18. Verfahren nach einem oder mehreren der Ansprüche 12
bis 17, dadurch gekennzeichnet, daß bei Temperaturen
von 100 bis 600$^{\circ}$C, insbesondere von 200 bis 400$^{\circ}$C,
ausgehärtet wird.

0118744

19. Verfahren nach einem oder mehreren der Ansprüche 12 bis 18, dadurch gekennzeichnet, daß die Mischung in Formen oder Formkörpern eingebracht und vorzugsweise vor dem Aushärten gepreßt wird.

20. Verfahren nach einem oder mehreren der Ansprüche 12 bis 19, dadurch gekennzeichnet, daß ein Blähperlit mit Korngrößen im Kornbereich von 0 bis 6 mm und im Schüttgewichtsbereich von 20 bis 150 g/l, vorzugsweise von 20 bis 60 g/l, verwendet wird.